# EUROPEAN PATENT SPECIFICATION

(11) **EP 4 202 588 B1**
(45) Date of publication and mention of the grant of the patent: **09.10.2024**
(21) Application number: 21216723.3
(22) Date of filing: 22.12.2021
(51) Int. Cl.: G05D 1/00

(54) **DETECTION OF AN OCCURRING DEADLOCK CONFLICT IN A ROBOT FLEET OF AUTONOMOUS MOBILE ROBOTS**
ERKENNUNG EINES AUFTRETENDEN BLOCKIERUNGSKONFLIKTES IN EINER ROBOTERFLOTTE VON AUTONOMEN MOBILEN ROBOTERN
DÉTECTION D'UN CONFLIT DE BLOCAGE EN COURS DANS UNE FLOTTE DE ROBOTS MOBILES AUTONOMES

(43) Date of publication of application: 28.06.2023
(73) Proprietor: Mobile Industrial Robots A/S, 5260 Odense S (DK)
(72) Inventor: NØRBY, Morten Steen, 5800 Nyborg (DK)
(74) Representative: Patentgruppen A/S

(56) References cited:
- CN-A- 108 279 675
- DRAGANJAC IVICA ET AL: "Highly-scalable traffic management of autonomous industrial transportation systems", ROBOTICS AND COMPUTER INTEGRATED MANUFACTURING, ELSEVIER SCIENCE PUBLISHERS BV., BARKING, GB, vol. 63, 13 December 2019 (2019-12-13), XP086019179, ISSN: 0736-5845, [retrieved on 20191213], DOI: 10.1016/J.RCIM.2019.101915
- XIAO HAINING ET AL: "A Collision and Deadlock Prevention Method With Traffic Sequence Optimization Strategy for UGN-Based AGVS", IEEE ACCESS, IEEE, USA, vol. 8, 19 November 2020 (2020-11-19), pages 209452 - 209470, XP011823207, DOI: 10.1109/ACCESS.2020.3039515

## Description

### Field of the invention

The present invention relates to a method for detecting an occurring deadlock conflict in a robot fleet of autonomous mobile robots. The invention further relates to a deadlock detection system.

### Background of the invention

A fundamental challenge of autonomous mobile robots is the occurrence of deadlock conflicts, in which at least one robot is unable to perform further actions due to another robot blocking it. One example is a situation in which each member of a group of robots waits for a resource blocked by another member of the group to form a circular dependency of resources in which no robot is capable of moving forward.

Different attempts have been made to predict deadlocks to establish operation plans in which deadlocks, in theory, do not occur. However, fleets of autonomous mobile robots are often required to travel in dynamic environments in which humans and sudden obstacles affect the operation of individual robots of the fleet. Mostly, such disturbances are unpredictable and cannot be prevented. Hence, no matter the quality of operation plans, deadlocks can rarely be avoided entirely. And furthermore, since systems of mobile autonomous robots form such a particularly challenging system for handling deadlocks, general solutions may not be applicable here, in contrast to other systems and even other autonomous systems. In the art, the following document titled "Highly-scalable traffic management of autonomous industrial transportation systems" (Draganjac Ivica Et Al), disclose a method for highly-scalable coordination of free- ranging automated guided vehicles in industrial logistics and manufacturing scenarios. The method integrated path planning and motion coordination capabilities and relies on a two-layer control architecture. Each vehicle plans its own shortest path and resolves conflicts by local negotiations with other vehicles as conflicts arise. Further in the art CN108279675 disclose a deadlock conflict management system for multiple mobile robots. Node areas are established beside the position of the robot and if nodes from two robots coincide a conflict state is reached. Then a judgment is made as to the direction of paths of the two robots and thus if a deadlock state occurs.

Thus, even though concepts may exist for predicting and even solving deadlocks, such solutions are not necessarily obvious to employ for autonomous mobile robots. Further, the occurrence of deadlocks can typically not be avoided entirely.

### Summary of the invention

The invention is set forth in the independent claims 1 and 8 and in the dependent claims 2 to 7 and 9 to 14. The inventor have identified the above-mentioned problems and challenges related to deadlocks of autonomous mobile robots, and subsequently made the below-described invention which may facilitate detection of an occurring deadlock conflict.

An aspect of the invention relates to a method for detecting an occurring deadlock conflict in a robot fleet of autonomous mobile robots, said method comprising the steps of:
designating a plurality of robot resource zones to respective physical zones in a physical environment, wherein autonomous mobile robots of said robot fleet are individually capable of blocking and being operated towards resource zones of said plurality of robot resource zones;
operating said robot fleet such that autonomous mobile robots of said robot fleet individually and dynamically block different resource zones of said plurality of robot resource zones;
monitoring said robot fleet to identify deadlock-relevant robot states associated with at least two mobile robots of said robot fleet, wherein said deadlock-relevant robot states are indicative of restricted movability of said at least two mobile robots, wherein said at least two mobile robots comprises at least a first robot and a second robot; and
identifying that said first robot is being operated towards a resource zone of said plurality of robot resource zones blocked by said second robot to detect said occurring deadlock conflict.

Fleets of autonomous mobile robots operate in complex and dynamical physical environments which are non-trivial to analyze by, e.g., a computer, to assess whether a robot has been halted temporarily, or whether a deadlock conflict is actually occurring. By designating a plurality of robot resource zones to respective physical zones of the physical environment, a representation of the complex physical environment is established which is accessible for analysis by computer-based systems, which is advantageous. Furthermore, a practical division of physical space is established by designating a plurality of robot resource zones.

By monitoring the robot fleet, deadlock-relevant robot states may advantageously be identified. Typically, each robot of a fleet may have at least one robot state indicative of its current operational states. At least some of these different robot sates may be indicative that a given robot is part of an occurring deadlock conflict, whereas at least some other of these robot states may be indicative that a given robot is not part of an occurring deadlock conflict. However, the state of a single robot is typically not by itself sufficient for deducing that a deadlock conflict might be occurring, since deadlock conflicts involve several robots. Therefore, identifying deadlock-relevant robot states associates with at least two mobile robots of the robot fleet may reduce the risk of erroneously identifying an occurring non-deadlock scenario as a deadlock conflict.

The robot resource zones, representing actual physical zones, and the at least two robots associated with deadlock-relevant robot states are utilized in combination to detect an occurring deadlock conflict. Namely, in embodiments of the invention, in the occurrence of a scenario where one of the at least two robots is being operated towards a resource zone blocked by the other of the two robots, this scenario is recognized as a deadlock conflict. In other words, an occurring deadlock conflict is detected.

This approach advantageously provides a clear and straightforward methodology for identifying and detecting an occurring deadlock conflict in systems of many autonomous mobile robots in complex physical environments.

Relying on deadlock-relevant robot states alone (without considering resource zones), may be disadvantageous in comparison. By exclusively detecting occurring deadlock conflicts based on states labelled as deadlock-relevant, labelling many different robot states as deadlock-relevant could lead to many false positive detections of occurring deadlock conflicts, whereas labelling few different robot states could lead to certain deadlock scenarios not being detected altogether. Alternatively, by exclusively detecting occurring deadlock conflicts based on one robot being operated towards a resource zone blocked by another robot, many scenarios in which a robot is just waiting for another robot temporarily blocking an area could erroneously be detected as occurring deadlock conflicts, even though such conflicts may quickly be resolved by the robots themselves. By combining identification of deadlock-relevant robot states with analysis of robot resource zones, a well-suited threshold for detection of occurring deadlock conflicts is advantageously provided, which potentially does not identify too many false positive deadlock conflicts, nor fails to identify actually occurring deadlock conflicts. And basing detection of occurring deadlock conflicts on a designation of robot resource zones is an advantageous approach for autonomous mobile robots, since these robots indeed rely on actually travelling around different physical zones.

An autonomous mobile robot (AMR) may also be referred to as an automated guided vehicle (AGV), a drive unit, or a mobile industrial robot. Within this disclosure, an AMR may also simply be referred to as a robot. An AMR is typically a piece of machinery that is able to be programmed, e.g., to perform logistic tasks in industrial settings such as production facilities, warehouse facilities, and medicinal facilities, such as hospitals. Such robots typically move autonomously using its own wheels, having a body for supporting an object to be moved in a logistic task. Further, a robot typically has its own robot control system arranged to maneuver the robot along a route, such as a planned route. The robot control system may further be capable of planning a route, which the robot can then travel along. A control system may for example comprise a process controller and access to a digital storage. The control system of each individual robot may provide information indicative of a robot state of that robot, such as the robot state itself. The robot control system may then provide this robot state to a central control system. A control system may further provide an assessment as to which robot resource zone the robot is occupying, and which robot resource zone the robot is being operated towards. Examples of autonomous mobile robots include differential drive robots, robots based on bicycle steering, and robots based on Ackermann steering. Examples further include autonomous robotic forklifts.

A robot fleet of autonomous mobile robots may be understood as a plurality of autonomous mobile robots which at least partially operate within the same physical environment, such that deadlock conflicts may occur between these robots.

Robot resource zones may be understood as digital representations of physical zones of a physical environment. Typically, each separate sub-part of a physical environment (i.e. respective physical zones) may be represented by a respective robot resource zone. Not every physical zone of the physical environment is necessarily associated with a robot resource zone. For example, large rooms in which deadlock-conflicts have a low probability of occurring may not have designated robot resource zones, whereas hallways, intersections, and smaller rooms are each typically designated with a respective robot resource zone. However, in some embodiments, the entire physical environment is represented by robot resource zones. A robot resource zone may also be associated with robot-relevant apparatus, such as a charger or docking station of an autonomous mobile robot. In typical embodiments of the invention, the physical environment is an inside environment and/or a flat-floored environment. The solutions offered by the invention are particular useful in inside environments and flat-floored environments.

In practice, the designation of robot resource zones may be stored in individual robots, and/or a central control system.

When the robot fleet is being operated, each individual robot of the fleet may operate to perform the tasks it has been programmed to perform. As a robot is being operated, it most often moves around different physical zones corresponding to resource zones. By occupying, blocking, or being operated towards a physical zone, a robot may be considered as occupying, blocking, or being operated towards a robot resource zone representing/associated with that physical zone. During this operation, the robot may thus concurrently travel across several different resource zones. During such operation, it may at one point occupy one resource zone, whereas, at a later point, it may occupy a different resource zone. Optionally, it may also occupy several resource zones, partially occupy one or more resource zones, or, at a point in time, occupy no resource zones at all. Occupying a robot resource zone may be understood as being physically present in a physical zone associated with that robot resource zone, thus restricting other robots from travelling into that zone. Similarly, partially occupying a robot resource zone may be understood as being physically present in a physical zone associated with that robot resource zone, thus partially restricting other robots from travelling into that zone. Several robots which each partially occupy a resource zone may in combination fully occupy that resource zone.

A robot does not necessarily have to occupy a resource zone to block it. For example, a robot can also block a resource zone by occupying a pathway towards that resource zone (which another robot has to travel along). Or, in another example, in embodiments with resource zone queues, a robot can block a resource zone by being prior to another robot in the resource zone queue.

A robot being operated towards a robot resource zone may be understood as that robot having a task in which it is intended to travel to or through that resource zone. A robot being operated towards a robot resource zone may thus, in some situations, correspond to the robot travelling towards that resource zone. However, in case access to a physical zone associated with a resource zone is blocked, the robot may be forced to halt. In such a situation, the robot may still be considered to being operated towards that resource zone, even though the robot is not moving, as long as the robot is still intended to travel to or through that resource zone. Such a robot may then, for example, be associated with a waiting state. In case an occurring deadlock conflict is detected, the deadlock conflict may optionally be resolved by operating a robot towards another resource zone instead.

In some alternative embodiments, the step of operating the robot fleet is a step of operating said robot fleet such at least one autonomous mobile robot (e.g. a second robot) of said robot fleet is capable of at least partly occupying an individual resource zone of said plurality of robot resource zones and such that at least one other individual autonomous mobile robot (e.g. a first robot) operated towards said resource zones is capable of going into a waiting state if the resource zone operated towards is occupied to a degree not allowing more autonomous mobile robots of said robot fleet to enter this resource zone. In such embodiments, (at least) the first robot is (in a waiting state associated with) waiting for a resource zone currently occupied by (at least) the second robot.

Typically, each robot of the fleet has at least one robot state indicative of its current operation and/or operational status. Some examples of robot states are "AwaitingOrder", "ExecutingOrder", "IndependentMission", "Charging", "Staging", "Synchronizing", "Evacuating", "Evacuated", "LowBattery", "Unavailable", "Error", "EmergencyStop", "Crashed" and "Unknown". Out of such states, one or more may be considered or labelled as deadlock-relevant robot states. Some states may be considered as deadlock-relevant in combination with other conditions, e.g., an "ExecutingOrder" state is only considered as a deadlock-relevant robot state if a robot having that state is not moving.

A common feature of different deadlock-relevant states may be that each deadlock-relevant robot state is associated with restricted movability of a robot having that state. Thus, a robot travelling according to normal operation may not be considered as having a deadlock-relevant robot state. In some embodiments of the invention, as a more specific example of restricted movability, the deadlock-relevant robot states are indicative of standstill of the at least two mobile robots.

According to embodiments of the invention, the robot fleet is being monitored to identify deadlock-relevant robot states. Such monitoring may for example be performed by a central control system, or in a distributed control system, e.g. a distributed control system based on one or more of the robots of the robot fleet. Such monitoring may for example involve continuously or regularly monitoring robot states of all robots of the robot fleet, to identify whenever at least two deadlock-relevant states appear among these robot states.

Identification of deadlock-relevant states may typically provide identification of the robots associated with these deadlock-relevant states.

With the information relating to deadlock relevant states of at least two mobile robots, it is possible to assess whether a deadlock conflict is actually occurring by taking robot resource zones into consideration. According to embodiments of the invention, if one of the at least two robots is being operated towards a resource zone blocked by another of the at least two robots, this situation is considered as being an occurring deadlock conflict which has then been detected.

The detection of an occurring deadlock conflict may optionally be followed by a notification, e.g. to a human operator, and/or steps for solving the occurring deadlock conflict.

Generally, any steps of the method may be implemented and/or executed on a computer. Optionally, the method may thus be a computer-implemented method.

In embodiments of the invention, said resource zone of said plurality of robot resource zones blocked by said second robot is (denoted) a conflict zone. In other words, as an alternative to the step of identifying that said first robot is being operated towards a resource zone, aspects of the invention may comprise a step of identifying that that the first robot is being operated towards a conflict zone to detect said occurring deadlock conflict, wherein said conflict zone is a resource zone of said plurality of robot resource zones blocked by said second robot.

In embodiments of the invention, said at least two mobile robots are (denoted) at least two conflict robots. In other words, as an alternative to the step of monitoring said robot fleet to identify deadlock-relevant robot states associated with at least two mobile robots of said robot fleet, aspects of the invention may comprise a step of monitoring said robot fleet to identify deadlock-relevant robot states associated with at least two conflict robots, wherein said at least two conflict robots are autonomous mobile robots of said robot fleet.

In some embodiments of the invention, said resource zone of said plurality of robot resource zones blocked by said second robot is a next-in-order resource zone of said first robot.

Some false positive detections may be avoided by restricting detection of occurring deadlock conflicts to situations in which the second robot block a resource zone which is the next resource zone of the first robot. That is, out of all of the robot resource zones of which the first robot is being operated towards for one or more tasks, a deadlock conflict in only detected when the resource zone that is blocked is the forthcoming resource zone of all of these robot resource zones. Such a next resource zone or a forthcoming resource zone may be referred to as a next-in-order resource zone. Thus, in some embodiments, an occurring deadlock conflict is detected on the condition that the conflict resource zone is a next-in-order resource zone of said first robot.

In some embodiments of the invention, said at least two mobile robots are at least three mobile robots, for example at least four mobile robots, such as at least five mobile robots.

Again, these robots may alternatively be referred to as conflict robots, independent of the number of robots.

The simple framework for deadlock detection provided by the invention may advantageously be applicable to very complex systems of many autonomous mobile robots.

In some embodiments of the invention, said second robot occupies said resource zone of said plurality robot of resource zones blocked by said second robot.

In some embodiments of the invention, said second robot occupies a pathway towards said resource zone of said plurality robot of resource zones blocked by said second robot

In some embodiments of the invention, said first robot and said second robot are each part of a resource zone queue indicative of an operation order of said at least two robots in relation to said resource zone of said plurality of robot resource zones blocked by said second robot.

In some embodiments of the invention, said first robot lies earlier than said second robot in said operation order.

In some embodiments of the invention, said second robot lies earlier than said first robot in said operation order.

These above examples correspond to separate types of deadlock conflicts, which each lie within the framework of the invention. Thus, the invention may both, be advantageously tailored towards one or more specific types of deadlock scenarios which connect be detected using conventional solutions, or the invention may be more generally applied to advantageously detect many different types of deadlock scenarios.

In some embodiments of the invention, said plurality of robot resource zones is associated with respective maximum robot capacities, each indicative of a maximum number of autonomous mobile robots of said robot fleet occupying a physical zone of said respective physical zones.

In some embodiments of the invention, said method comprises a step of determining that a number of autonomous mobile robots of said robot fleet in said resource zone of said plurality of robot resource zones occupied by said second robot is at said respective maximum robot capacity to provide a zone capacity saturation indication.

In some embodiments of the invention, detection of said occurring deadlock conflict is further based on said zone capacity saturation indication.

In some embodiments of the invention, said respective maximum robot capacity of said robot fleet in said resource zone of said plurality of robot resource zones occupied by said second robot is at least two.

In some embodiments of the invention, said respective robot capacities are different among said plurality of robot resource zones.

In some embodiments of the invention, autonomous mobile robots of said robot fleet are operationally restricted from moving to resource zones of said plurality of robot resource zones in which said number of autonomous mobile robots is at said respective maximum robot capacity.

By having respective maximum robot capacities indicative of a maximum number of autonomous mobile robots which are able to physically occupy a physical zone associated with respective resource zones of said plurality of robot resource zones, it is possible to further adjust and optimize operations of the robot fleet which is advantageous. For example, instead of designating many resource zones to many smaller physical zones, fewer resource zones can be designated to fewer larger physical zones with non-singular maximum robot capacities. Thus, within these larger zones, several robots can travel somewhat freely, permitting a more fluid and robust operation, which is advantageous. The respective maximum robot capacities may be different among the different zones to provide additional flexibility.

Accordingly, the invention may, optionally, involve determining that the number of robots in a particular robot resource zone is at the maximum robot capacity associated with that zone. And accordingly, the detection of an occurring deadlock conflict may then be based on this determination, such that an occurring deadlock conflict is only detection when the first robot is being operated towards a resource zone in which the number of robots is at the maximum robot capacity of that zone. In practice, this may be implemented by a zone capacity saturation indication, which may in turn be a digital binary indication of whether the number of robots in a resource zone is at the maximum robot capacity of that resource zone or not.

Optionally, robots are operationally restricted from moving into a resource zone in which the number of autonomous mobile robots is at the maximum robot capacity of that zone.

In some embodiments of the invention, said method comprises a step of providing individual robot states indicative of current operational statuses of respective autonomous mobile robots of said robot fleet, wherein said step of monitoring said robot fleet to identify deadlock-relevant robot states is based on identifying said deadlock-relevant robot states among said individual robot states.

By having detection of deadlock-relevant robot states among individual robot states, it is possible to employ standard robot states for detecting deadlock conflicts, which is advantageous. The individual robot states may be provided by the individual autonomous mobile robots of the robot fleet, or by a central control system.

In some embodiments of the invention, said individual robot states comprise respective occupation states of respective autonomous robots of said robot fleet, wherein said occupation states are indicative of occupation of a physical zone of said respective physical zones.

In some embodiments of the invention, said detection of said occurring deadlock conflict is further based on an occupation state of said respective occupation states of said second robot.

A robot may, optionally, have several robot states, e.g. one state indicative of current operational status, and another state indicative of its occupation status, i.e., which robot resource zone (or zones) is occupied (if any). In embodiments, the step of determining that a number of mobile robots of said robot fleet in the conflict zone is at the respective maximum robot capacity may be based on occupation states of at least the second robot (which is blocking/occupying the robot resource zone). The step of monitoring the robot fleet may further comprise identifying respective occupation states of respective autonomous mobile robots of said robot fleet. Additionally or alternatively, the step of monitoring the robot fleet may comprise identifying respective waiting states of respective autonomous mobile robots of said robot fleet.

In some embodiments of the invention, said deadlock-relevant robot states comprises different robot states.

In some embodiments of the invention, detection of said deadlock conflict is further based on a state persistence threshold which is indicative of a time duration in which said restricted movability has persisted during said step of operating said robot fleet.

In some embodiments of the invention, said state persistence threshold is associated with a duration of one or more than one of said deadlock-relevant states.

In some embodiments of the invention, said state persistence threshold is at least 1 second, for example at least 2 seconds, for example at least 3 seconds, such as at least 5 seconds.

By having a state persistence threshold, it may advantageously be possible to avoid some false positive detections of occurring deadlock conflicts, particular in situations in which robots are just temporarily halted but capable of continuing operation after a short duration. Such a situation could for example occur is a human shortly interposes the route of a robot, which then blocks a resource zone of another robot.

In some embodiments of the invention, said method comprises a step of mapping each of said at least two mobile robots to a digital directed graph comprising graph nodes and graph edges indicative of dependencies between said graph nodes, wherein resource zones of said plurality of robot resource zones are represented by said graph nodes and autonomous mobile robots of said robot fleet being operated towards resource zones of said plurality of robot resource zones are represented by said graph edges.

One advantageous approach for analyzing the robot resource zone is employing mathematical graph theory. Even though the robot resource zones relate to physical zones, they can be treated as abstract objects for the purpose of assessing the interdependencies between robots and zones. Accordingly, the various zones may be treated as graph nodes, and the dependencies of robots on zones may be treated as graph edges. For example, each robot may be associated with a graph edge such that this graph edge points from a resource zone that the robot is currently blocking/occupying towards a resource zone that the robot is being operated towards.

A robot may alternatively be represented by a graph node in combination with a graph edge, for example such that a graph node represents both a resource zone and robots occupying this resource zone.

A digital directed graph provides an advantageous framework for identifying and detecting dependencies, and thereby, occurring deadlock conflicts. Even though graph theory is a well-established mathematical area of studies, it is non-obvious that such abstract ideas can be employed in practice to the chaotic scenarios occurring in fleets of autonomous robots.

In some embodiments of the invention, said method comprises a step of analyzing said digital directed graph based on a graph-theory algorithm, such as Tarjan's strongly connected components algorithm, to identify one or more strongly connected components of said digital directed graph, wherein detection of said occurring deadlock conflict is further based on at least one of said one or more strongly connected components.

For example, (the step of) identifying that said first robot is being operated towards a resource zone of said plurality of robot resource zones blocked by said second robot is based on at least one of said one or more strongly connected components.

One way of analyzing a digital directed graph is by employing a graph theory algorithm, such as Tarjan's strongly connected components algorithm, which can identify strongly connected components of graph nodes. A strongly connected component may corresponds to one or more nodes which are interdependent on each other. Or, in mathematical terms, a (sub)set of a directed graph is said to be strongly connected if every contained vertex/node is reachable from every other vertex/node. Each of the one or more strongly connected components of the graph nodes is a distinct subset of the graph nodes. A strongly connected component may then be used to identify potential occurring deadlock conflicts. In fact, a strongly connected component may exactly correspond to an occurring deadlock conflict (given that the strongly connected component has more than one graph node).

Utilizing a graph-theory algorithm to identify strongly connected components is advantageous, since such strongly connected components may be directly indicative of occurring deadlock conflicts.

In some embodiments of the invention, said at least two mobile robots are being operated towards resource zones blocked by robots of said at least two mobile robots to form a circular dependency.

For example, a first robot is operated towards a resource zone blocked/occupied by a second robot which in turn is operated towards a resource zone blocked/occupied by the first robot. Or, for example, a first robot is operated towards a resource zone blocked/occupied by a second robot which in turn is operated towards a resource zone blocked/occupied by a third robot which in turn is operated towards a resource zone blocked/occupied by the first robot. Such circular dependencies are of course not restricted to examples of two and three robots but may involve any number of robots.

In some embodiments of the invention, said second robot is being operated towards an unsaturated resource zone of said plurality of robot resource zones.

In some embodiments of the invention, said second robot is not being operated towards a resource zone of said plurality of robot resource zones.

An occurring deadlock conflict does not necessarily have a circular dependency. For example, a linear dependency may occur, in which the front-most robot (in view of dependencies) is unable to proceed due to some non-robot obstacle blocking it, or due to a breakdown of this robot. That this front-most robot (e.g. the second robot) is being operated towards an unsaturated resource zone may be indicative of such a linear dependency. Or alternatively, that a front-most robot is not being operated towards a resource zone may similarly be indicative of a linear dependency.

In some embodiments of the invention, said method comprises a step of notifying a human operator of said occurring deadlock conflict.

Once a deadlock conflict occurs, the robots are typically not capable of solving the deadlock themselves. Therefore, notifying a human operator is advantageous, since this permits the human operator to assess and solve the deadlock, which is advantageous.

The step of notifying a human operator may be based on a visual indication and/or and audio indication. Examples of visual indications are warning lights, a massage/notification on a monitor of a computer device (e.g. smartphone, tablet, personal computer, or other type of computer-based system).

In some embodiments of the invention, said step of notifying said human operator comprises providing an indicator to said at least two mobile robots.

Such an indicator may comprise any information relating to the two robots, e.g. information permitting identification of each of the two robots, operational tasks of the robots (e.g. previous, current, and future operational tasks), type of robot, etc.

Such information may advantageously permit assessment of the occurring deadlock conflict, which in turn may be used to assess the situation, assess how urgent it is to solve, assess which means are required to solve it, and/or assess how operation of the robot fleet has to be adjusted.

In some embodiments of the invention, said step of notifying said human operator comprises providing an indicator to any resource zones of said plurality of robot resource zones blocked by said at least two mobile robots.

The indicator to the resource zones may in practice be an indicator to the respective physical zones associated with the resource zones. The indicator may for example be provided in relation to a map of the physical environment.

Such information may advantageously permit assessment of the occurring deadlock conflict, which in turn may be used to assess the situation, assess how urgent it is to solve, assess which means are required to solve it, and/or assess how operation of the robot fleet has to be adjusted.

In some embodiments of the invention, said step of notifying said human operator comprises providing a representation of said digital directed graph

The representation may be or include a representation of any of the one or more strongly connected components. A representation of the digital directed graph may further comprise information identifying robots of the robot fleet (e.g. the at least two robots involved in the occurring deadlock conflict), and/or information identifying robot resource zones/physical zones involved in (e.g. blocking/occupying) the occurring deadlock conflict.

In some embodiments of the invention, said method comprises a step of resolving said occurring deadlock conflict.

Resolving the deadlock conflict may be performed by the human operator, or it may be resolved automatically. One approach the a human operator may use to solve the occurring deadlock conflict is simply physically moving one or more of the robots.

The step of resolving the occurring deadlock conflict may be based on notifying a human operator, or it may be solved by notifying a control system (e.g. a central control system) arranged to automatically solve occurring deadlock conflicts.

Actually solving the occurring deadlock conflict is an optional supplement to the detecting the occurring deadlock conflict. Different attempts have been made to predict deadlock conflicts and solving such predicted deadlock conflicts, but an occurring deadlock conflict is principally different, since the deadlock is typically currently occurring when it has to be solved.

In some embodiments of the invention, said step of resolving said occurring deadlock conflict is based on providing an operation sequence related to operation of said at least two mobile robots.

Such an operation sequence may for example be related to a reordering of an operation order of a resource zone queue, for example such that said second robot lies earlier than said second robot in said operation order or vice versa.

An operation sequence may potential potentially resolve various deadlocks, which is advantageous.

In some embodiments of the invention, said step of resolving said occurring deadlock conflict is based on providing a deadlock-resolving command to at least one of said at least two mobile robots.

In some embodiments of the invention, said deadlock-resolving command results in changing at least one of said deadlock-relevant robot states.

An example of a deadlock-resolving command is operating at least one of said at least two robots to a new resource zone of said plurality of robot resource zones.

An aspect of the invention relates to a deadlock detection system for detecting an occurring deadlock conflict, wherein said deadlock detection system comprises:
a plurality of robot resource zones designated to respective physical zones of a physical environment;
a robot fleet of autonomous mobile robots individually capable of blocking and being operated towards resource zones of said plurality of robot resource zones; and
a deadlock detection processor configured to monitor said robot fleet to identify deadlock-relevant robot states indicative of restricted movability of individual autonomous mobile robots of said robot fleet during operation of said robot fleet, wherein said deadlock detection processor is further configured to identify that a first robot is being operated towards a resource zone of said plurality of robot resource zones blocked by a second robot to detect said occurring deadlock conflict when said processor identifies deadlock-relevant robot states associated with at least two robots of said robot fleet, wherein said at least two mobile robots comprises at least said first robot and said second robot.

Any system according to the invention may potentially provide any of the advantages of any method of the invention and vice versa.

Generally, a deadlock detection processor may in practice be implemented in any type of computer system. The computer system may for example comprise any components of typical conventional computer systems onto which the invention may be (partially) implemented, such as processor, memory/digital storage, digitally stored computer programs, input/output devices etc. It may be a centralized or a distributed computer system. A distributed control system may for example be distributed among robots of the robot fleet and/or via a cloud/internet server.

In some embodiments of the invention, said robot fleet is configured to provide individual robot states indicative of current operational statuses of respective autonomous mobile robots of said robot fleet, such as said deadlock-relevant robot states, wherein said deadlock detection processor is configured to identify said deadlock-relevant robot states based on identifying said deadlock-relevant robot states among said individual robot states.

By having detection of deadlock-relevant robot states among individual robot states, it is possible to employ conventionally used robot states for detecting deadlock conflicts, which is advantageous.

In some embodiments of the invention, several different states of said individual robot states qualify as said deadlock-relevant robot states.

Autonomous mobile robots can often be configured to have a large number of different states depending on its operation. Several of these may potentially be indicative of a deadlock, and hence, having several individual robot states qualifying as deadlock relevant robot states may potentially ensure that many occurring deadlock conflicts are detected, which is advantageous.

In some embodiments of the invention, said individual robot states comprises non-deadlock-relevant robot states indicative of normal operation of individual autonomous mobile robots of said robot fleet during operation of said robot fleet.

In some embodiments of the invention, said individual robot states comprises at least one critical state indicative of a selfsustained operational restriction of an autonomous mobile robot of said robot fleet, wherein said deadlock-relevant robot states comprises said critical state.

A robot having a critical state indicative of a selfsustained operational restriction may be understood that robot being restricted in its further movement independently of other robots of the fleet. In other words, the robot has restricted movability, but not due to other robots blocking it.

Having a critical state indicative of a selfsustained operational restriction as a deadlock-relevant state is advantageous, since such a selfsustained operational restriction can potentially block other robots of the fleet.

In some embodiments of the invention, said individual robot sates comprises consideration states which are evaluated in combination with velocity of respective autonomous mobile robots of said robot fleet to qualify as said deadlock-relevant robot states.

In some embodiments of the invention, said consideration states comprise waiting states indicative that a respective autonomous mobile robot of said robot fleet is waiting for a resource zone of said robot resource zones.

Some robot states might primarily be indicative of a potential deadlock conflict in combination with other conditions. An example of such a type of states are consideration states. These states are evaluated in combination with the velocity of robots having these states. For example, if the velocity of a robot is below a certain velocity threshold while the robot has this consideration state, then the consideration state qualifies as a deadlock-relevant robot state, from which an occurring deadlock conflict may be detected.

The velocity may be angular velocity, translational velocity, or any combination thereof. Examples of translational velocity thresholds are 0.5 meters per second, 0.2 meters per second, 0.1 meters per second, and 0.05 meters per second. Examples of angular velocity thresholds are 20 degrees per second, 10 degrees per second, 5 degrees per second, and 2 degrees per second.

Embodiments of the invention may be based on individual robot states having both critical states and consideration states, different critical states and consideration states, critical states and different consideration states, or different critical states and different consideration states. Having such combinations of states qualifying as deadlock-relevant robot states permits a flexible deadlock detection scheme capable of detecting many different types of deadlocks.

Furthermore, this permits detection of deadlocks in which one robot has a critical state, and one other robot has a consideration state, which is advantageous. Such deadlocks would not be detected by systems exclusively looking for deadlocks via considerations states and looking for other deadlocks via critical states.

In some embodiments of the invention, said deadlock detection processor is configured to identify said occurring deadlock conflict based on said second robot occupying said resource zone of said plurality of robot resource zones blocked by said second robot.

In some embodiments of the invention, said deadlock detection processor is configured to identify said occurring deadlock conflict based on said second robot occupying a pathway towards said resource zone of said plurality of robot resource zones blocked by said second robot.

In some embodiments of the invention, said first robot and said second robot are each part of a resource zone queue indicative of an operation order of said at least two robots in relation to said resource zone of said plurality of robot resource zones blocked by said second robot.

In some embodiments of the invention, said first robot lies earlier than said second robot in said operation order.

In some embodiments of the invention, said second robot lies earlier than said first robot in said operation order.

These above examples correspond to separate types of deadlock conflicts, which each lie within the framework of the invention. Thus, the invention may both, be advantageously tailored towards one or more specific types of deadlock scenarios which connect be detected using conventional solutions, or the invention may be more generally applied to advantageously detect many different types of deadlock scenarios.

Embodiments of the invention may thus potentially be configured to identify several types of occurring deadlock conflicts. For example, an embodiment of the invention is a deadlock detection system for detecting a first occurring deadlock and for detection a second occurring deadlock, the deadlock detection system comprising a deadlock detection processor configured to identify said first occurring deadlock conflict based on said second robot occupying said resource zone of said plurality of robot resource zones blocked by said second robot, and said deadlock detection processor is configured to identify said second occurring deadlock conflict based on said second robot occupying a pathway towards said resource zone of said plurality of robot resource zones blocked by said second robot. In such an embodiment, the deadlock detection processor is not necessarily restricted to simultaneously detecting a first and a second occurring deadlock conflict, but merely configured to be able to perform detections of different types of deadlocks. Having a single system being able to detect such different types of deadlocks is advantageous, since this may increase certainty, e.g. for the human operator, that an occurring deadlock conflict is detected.

In some embodiments of the invention, each autonomous mobile robot of said robot fleet comprises a sensory system, for example a sensory system comprising at least one range sensor such as one or more LIDAR scanners.

Other examples of range sensors are proximity sensors, radar systems, and cameras (potentially in combination with image analysis to determine range).

While the autonomous mobile robot is maneuvered through a route, the sensory system may sense the surroundings of the robot, e.g. continuously or regularly. Thus, the robot may be capable of sensing obstacles which could potentially conflict its route as well as potential safety hazards. Further, it may potentially use sensed surroundings to perform simultaneous localization and mapping or Monte Carlo localization to obtain an indication of an actual physical location of the robot in relation to the area map.

Further, in some embodiments of the invention, the sensory system is at least based on an odometer. The odometer may particularly be useful for supporting navigation when there are no sensed obstacles in the robot surroundings, which can otherwise be used for localization of the robot. In some embodiments of the invention, the sensory system is at least based on a gyro meter. The gyro meter may provide an indication of orientation of the robot. It may support the odometer in providing an approximate perceived robot location, particularly while there are no sensed obstacles in the robot surroundings.

In some embodiments of the invention, each autonomous mobile robot said robot fleet comprises a process controller for autonomous operation of that autonomous mobile robot and a separate safety controller.

The safety controller may provide functionalities to ensure that the robot can break or maneuver to avoid collisions, e.g., if a person suddenly walks into the route of the robot, corresponding to the sudden appearance of a sensed obstacle.

In some embodiments of the invention, each autonomous mobile robot of said robot fleet is configured to maneuver through said physical environment via an area map of said physical environment.

An area map for example be an area map with mapped elements, and it may be configured to travel according to a planned robot route through this area map based on circumnavigating at least some of the mapped elements. A planned robot route may for example provide a route from one location in the physical environment to another location of the physical environment, for example to facilitate that the robot can perform a particular work task.

### The drawings

Various embodiments of the invention will in the following be described with reference to the drawings where
fig. 1 illustrates a deadlock detection system according to an embodiment of the invention,
fig. 2 illustrates an example of an autonomous mobile robot,
fig. 3a-c illustrate various deadlock conflicts of autonomous mobile robots,
fig. 4 illustrates resource zone capacities and saturation according,
fig. 5 illustrates robot states and monitoring of these,
fig 6 illustrates method steps according to an embodiment of the invention, and
fig. 7a-c illustrate employment of graph theory concepts in analysis of robot fleets in robot resource zones.

### Detailed description

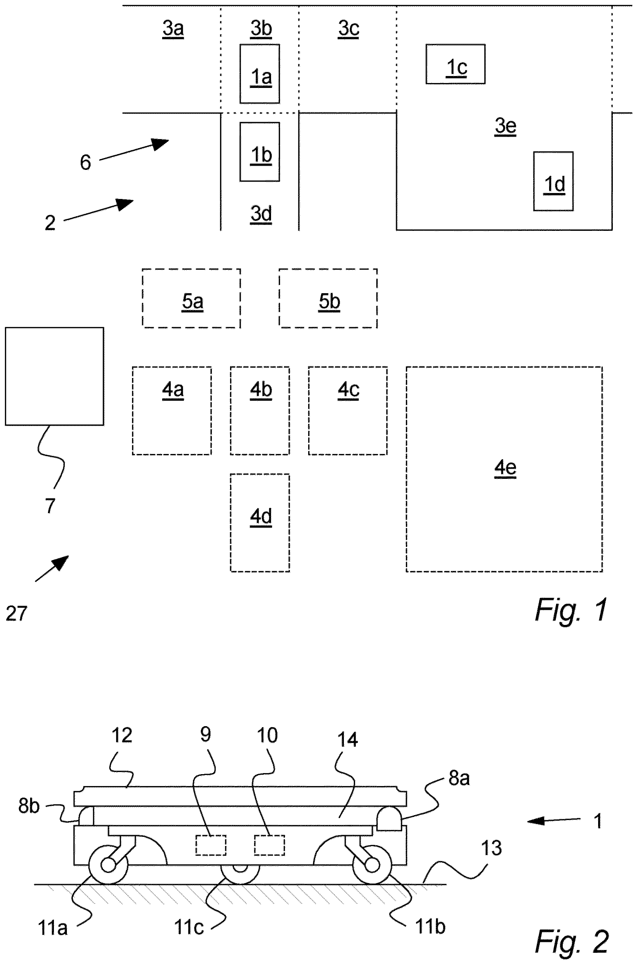

Fig. 1 illustrates a deadlock detection system 27 according to an embodiment of the invention. The system 27 comprises a deadlock detection processor 7 configured to detect an occurring deadlock conflict 6 according to the invention.

The top part of the figure shows a physical environment 2 comprising different physical locations 3a-3e separated by dotted lines in the illustration.

A plurality of robot resource zones 4a-e is designated to the different physical locations 3a-3e of the physical environment 2 such that each resource zone of the plurality of robot resource zones 4a-e is a digital representation of a respective physical zone 3a-e of the physical environment.

These robot resource zones may be stored digitally in a centralized or a distributed control system. This control system should preferably be in communication with the deadlock detection processor 7. The deadlock detection processor 7 may even be integrated with a central of a distributed control system, and vice versa.

A robot fleet of autonomous mobile robots 1a-d operate in the physical environment 2. In this particular example, four robots are located in various parts of the physical environment 2. If a robot has a deadlock-relevant robot state, it communicates this state for monitoring by the deadlock detection processor 7. A robot may optionally communicate other states as well, such as occupation states and/or non-deadlock relevant states.

Moreover, each of the robots 1a-d communicate location information which may be used to determine whether and which of the robot resource zones they are currently occupying and or blocking. And further, each of the robots 1a-d communicate information indicative of which robot resource zone it is currently being operated towards. The information communicated by the robots can then be used by the deadlock detection processor 7 to detect any occurring deadlock conflicts.

In the illustration, the physical environment 2 comprises a first zone 3a corresponding to a corridor, a second zone 3b corresponding to an intersection, a third zone 3c corresponding to another corridor, a fourth zone 3d corresponding to another corridor, and a fifth zone 3e corresponding to a hall. The robot fleet of four robots 1a-d are distributed across the physical locations. A first robot 1a is located in the second zone 3b, a second robot 1b is located at the fourth zone 3d, and a third robot 1c and a fourth robot 1d are located in the fifth zone 3e.

Each of the robots 1a-d may be considered as partially or fully occupying/blocking the physical zone in which it is located. Similarly, each of the robots 1a-d may be considered as partially or fully occupying/blocking the robot resource zone associated with the physical zone in which it is located. For example, the first robot 1a is located in the second physical zone 3b. Correspondingly, the robot 1a occupies this physical zone 3b. And, it occupies the second robot resource zone 4b.

The first robot 1a is currently being operated towards the fourth zone 3d occupied by the second robot 1b, and the second robot 1b is currently being operated towards the second zone 3b occupied by the first robot 1a. This has resulted in an occurring deadlock conflict among these two mobile robots 1a-b.

These two robots 1a-b have restricted movability, as they cannot move to the zone towards which they are being operated. Correspondingly, the first robot 1a communicates a first deadlock-relevant robot state 5a and the second robot 1b communicates a second deadlock-relevant robot state 5b. These robot states 5a-b are communicated to be used by the deadlock detection processor 7 for detecting the occurring deadlock conflict 6.

Upon recognizing that at least two deadlock-relevant robot states 5a-b are being provided, the deadlock detection processor 7 identifies which of the robot resource zones 4a-e that the robots associated with these at least two states are occupying/blocking, and which of the resource zones 4a-e that these robots are being operated towards.

By identifying that the first robot 1a is being operated towards a resource zone 3d of the plurality of resource zones 3a-e blocked by the second robot 1b, the deadlock detection processor detects the occurring deadlock conflict 6.

The embodiment may optionally be configured to notify a human operator of the occurring deadlock conflict or resolving the deadlock conflict.

Note that no other pairs of robots in the figure fulfil the conditions of having deadlock-relevant states while one robot of the pair is being operated towards a resource zone occupied by the other robot of the pair. Hence, no false positive detections occur in the illustrated scenario.

Fig. 2 illustrates an example of an autonomous mobile robot 1. This particular illustration shows a side view of the robot 1 located in a flat-floored environment 13, such as a production facility.

The robot 1 comprises a sensory system 8a-b in the form of two LIDAR scanners, placed in opposite corners of the robot 1. Given the positioning of the LIDAR scanners 8a-b at the corners of the robot 1, and a longitudinal gap 14 around the exterior of the robot 1 which permits a scan signal to travel into the robot surroundings from the LIDAR scanners, each of the two LIDAR scanners are able to scan approximately an angle 270 degrees. The LIDAR scanners 8a-b are thus efficiently able to horizontally cover all 360 degrees around to robot at least once.

Moreover, three wheels 11a-c are visible in the illustration. The robot has a total of six wheels, where the visible wheels 11a-c obstruct the view to the remaining wheels.

Some of the wheels 11a-b are responsible for steering the robot. Other wheels 11c are associated with one or more odometers, which provides an indication of a distance travelled by the robot 1. This is useful for supporting navigation, particularly when there are no obstacles in the surroundings of the robot which it can use for determining its location, e.g., relative to an area map. In other embodiments, the same wheels are used for steering and odometry.

Moreover, the robot has a support surface 12 for receiving items to be transported by the robot 1.

The robot further comprises a robot control system 9 and a safety controller 10. These elements are integrated internally in the robot 1, indicated by dashed rectangles in the illustration.

The robot control system 9 controls establishment of planned robot routes, sub routes, maneuvering the robot (via the wheels), and execution of a Monte Carlo localization algorithm for determining the location of the robot in the physical environment. The safety controller 10 provides safety functionalities, such as emergency braking for avoiding collisions with people and obstacles.

The robot control system 9 and the sensory system 8a-b are communicatively connected, such that measurements performed by the LIDAR scanners 8a-b can be provided to the control system 9, such that these measurements can be processed. The input to the control system 9 from the sensory system 8a-b can thus serve as basis for maneuvering and localizing the robot.

Optionally, the control system 9 further provides a robot state indicative of current operational status of the robot. For example, a first possible state is indicative of normal operation of the robot and a second state is indicative of restricted movability of the robot. Depending on operation, the control system may then provide one of these two states to, e.g., a centralized deadlock detection processor. This deadlock detection processor may then monitor a robot fleet of autonomous mobile robots and states provided by the robot fleet to identify any deadlock-relevant robot states, upon which an occurring deadlock conflict can be detected.

Alternatively, a central control system may provide the robot states of the robot fleet. The central control system may then be in communication with the deadlock detection processor.

Further, the robot control system 9 may, optionally, provide information about the location of the autonomous mobile robot, such as an occupation state. Thus, the several states and types of states may be provided for each autonomous mobile robot of the robot fleet. The location of the autonomous mobile robot may be in the form of a coordinate of the robot, a physical zone of the robot, and/or a robot resource zone of the robot. By combining the locations and states of several robots, an occurring deadlock conflict may then be detected.

Even further, the robot control system 9 may, optionally, provide information about the physical location(s) and/or robot resource zone(s) which the robot is currently being operated towards (if any). This information may be provided to, e.g., a centralized deadlock detection processor, which may then detect an occurring deadlock conflict based on this information.

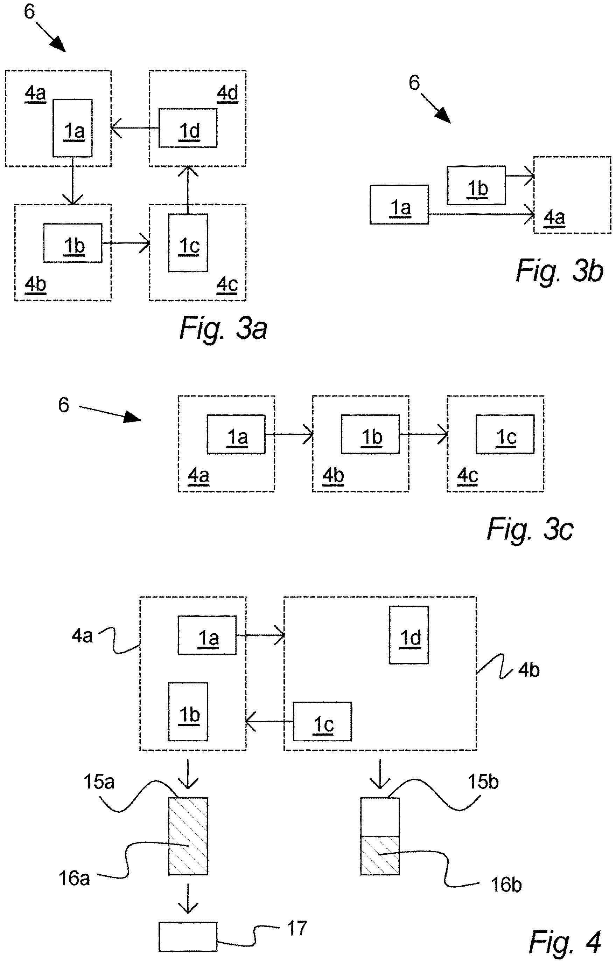

Fig. 3a-c illustrate various deadlock conflicts 6 of autonomous mobile robots 1a-d. These deadlock conflicts 6 are examples of different types of deadlock conflicts which all lie within the scope of the invention.

For simplicity, robots are illustrated in the robot resource zones 4a-d which they occupy. However, a robot resource zone may typically merely be a digital representation of a physical zone. A robot occupying a physical zone may then be considered as occupying the robot resource zone associated with that physical zone.

In fig. 3a, a first robot 1a occupies a first resource zone 4a, a second robot 1b occupies a second resource zone 4b, a third robot 1c occupies a third resource zone 4c, and a fourth robot 1d occupies a fourth resource zone 4d. Each of the robots 1a-d are being operated towards another resource zone than the one they are occupying, which is illustrated by arrows extending from each individual robot towards the resource zone that the robot is being operated towards. The first robot 1a is being operated towards the second resource zone 4b, the second robot 1b is being operated towards the third resource zone 4c, the third robot 1c is being operated towards the fourth resource zone 4d, and the fourth robot 1d is being operated towards the first resource zone 4a. Thus, each robot of this group of robots are each being operated towards a resource zone blocked or occupied by another robot of this group to form a circular dependency.

Some embodiments of the invention are configured to specifically detect such deadlock conflicts which form a circular dependency.

In fig. 3b, a first robot 1a and a second robot 1b are each being operated towards the same resource zone 4a. For the first robot 1a, the resource zone 4a is blocked by the second robot 4b since the second robot 1b physically blocks a corridor towards the physical zone associated with the resource zone 4a. Such a situation may for example occur due to a breakdown or emergency stop of the second robot. Alternatively, such a situation may occur in embodiments with a resource zone queue indicative of an operation order of the two robots in relation to the resource zone 4a. In particular, if the first robot lies earlier than the second robot in the operation order (than the second robot), then the second robot 1b may wait for the first robot 1a to enter the resource zone 4a while simultaneously restricting the first robot 1a from doing so.

Some embodiments of the invention are configured to specifically detect such deadlock conflicts in which robots block a resource zone without actually occupying the resource zone, e.g. via occupying a pathway towards that resource zone or via a resource zone queue.

In fig. 3c, a first robot 1a in a first resource zone 4a is being operated toward a second resource zone 4b occupied by a second robot 1b, which in turn is being operated towards a third resource zone 4c occupied by a third robot 1c. The third robot 1c has a deadlock-relevant state indicative of restricted movability of that robot 1c. It may for example be blocked from further movement by one or more physical objects in its vicinity. Thus, this robot 1c is not necessarily being operated towards a resource zone blocked or occupied by another robot or being operated towards a resource zone at all. Nevertheless, it may be the source of a deadlock conflict in which the robots and resource zones form a linear dependency (in contrast to a circular dependency).

Some embodiments of the invention are configured to specifically detect such deadlock conflicts which form a linear dependency.

Further, some embodiments of the invention are configured to detect several different types of deadlock situations, for example several of the different deadlock scenarios illustrated in fig. 3a, fig. 3b, and fig. 3c, respectively. For example, an embodiment may be configured to identify both deadlocks with circular dependencies and deadlocks with linear dependencies.

Fig. 4 illustrates capacities of robot resource zones 4a-b. Again, for simplicity, robots are illustrated in the robot resource zones which they occupy. And arrows extending from robots indicate a resource zone which a particular robot is being operated towards.

In some embodiments one of more of the plurality of resource zone are each associated with a respective maximum robot capacity 15a-b. Each respective maximum robot capacity is indicative of a maximum number of autonomous mobile robots occupying a physical zone associated with the resource zone associated with that respective maximum robot capacity.

This particular example shows two resource zones 4a-b. The first resource zone 4a is associated with a first number of autonomous mobile robots 16a and a first maximum robot capacity 15a, whereas the second resource zone 4b is associated with a second number of autonomous mobile robots 16b and a second maximum robot capacity 15b. Here, the maximum robot capacities 15a-b and the numbers of robots 16a-b are illustrated on respective vertical scales, in which the hatched region corresponds to the number of robots relatively to the maximum capacity. Naturally, embodiments of the invention do not rely on a graphical presentation of this information.

The first resource zone 4a has a maximum robot capacity 15a corresponding to two autonomous mobile robots. And the second resource zone 4b has a maximum robot capacity 15b corresponding to four autonomous mobile robots. Two robots 1a-b currently occupy the first resource zone 4a, and hence, the first number of robots 16a is two, corresponding to the maximum robot capacity 15a of this resource zone 4a. Two other robots 1c-d (partially) occupy the second resource zone 4b, and hence the second number of robots 16b is two, corresponding to half the maximum robot capacity 15b of this resource zone 4b.

Thus, the number of autonomous mobile robots in the fist resource zone is at the respective maximum robot capacity. This condition is communicated by a capacity saturation indication 17 to potentially be used for determining an occurring deadlock conflict. In some embodiments, if a first robot is being operated towards a resource zone occupied by a second robot, an occurring deadlock conflict is only detected on the condition that the occupied resource zone has a number of robots which is at its respective maximum robot capacity. The capacity saturation indication 17 can be used to determine whether this condition is fulfilled. It may for example be communicated to a deadlock detection processor, which is then informed that the number of robots at a particular resource zone is at the maximum robot capacity. Thus, in such embodiments, if the number of robots in the relevant resource zone is not at the maximum robot capacity, the situation is not interpreted as an occurring deadlock conflict. This may advantageously result in avoiding detection of an occurring deadlock conflict when a resource zone hosts a robot with a deadlock relevant robot state, but the resource zone has plenty of vacant space for additional robots.

In this particular illustration, a first robot 1a in the first resource zone 4a is being operated towards the second resource zone 4b, and a third robot 1c in the second resource zone 4b is being operated towards the first resource zone 4a. Optionally, the third robot 1c may be operationally restricted from entering the first resource zone 4a since the number of robots 16a in this resource zone 4a is at the maximum robot capacity of this resource zone 4a. Thus, in practice, the robot 1c is programmed to not enter the physical zone associated with the first resource zone 4a when there is already two robots 1a-b present in that zone. For example, the capacity saturation indication 17 may be communicated to relevant robots, which are then informed of the saturation of a particular zone. The control system of the robot then restricts the robot from moving to this zone.

Even if the third robot 1c is operationally restricted from entering the first resource zone 4a, this may not necessarily be interpreted as an occurring deadlock conflict, since this requires the presence of two deadlock relevant robot states among the involved robots. In the illustrated example, the first robot is currently being operated towards the second resource zone 4b, thus providing a vacancy in the first resource zone 4a for the third robot 1c. This example illustrates that the invention may be capable of avoiding detection of an occurring deadlock conflict in cases in which robots are not necessarily deadlocked but merely waiting for other robots to move. Reducing risk of such false positive detections are not restricted to embodiments with zones of particular maximum robot capacities.

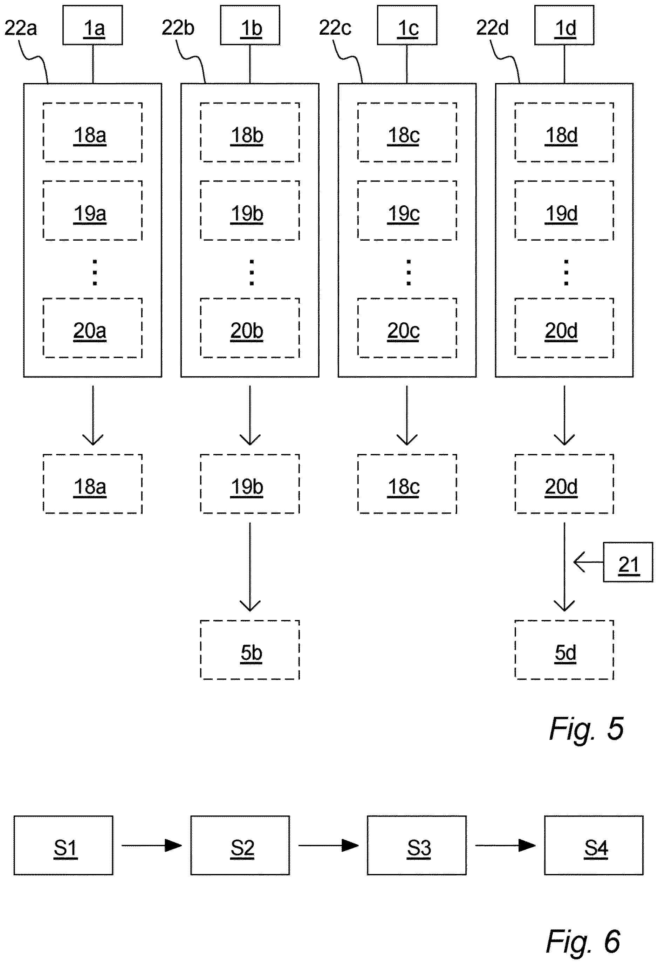

Fig. 5 illustrates robot states of autonomous mobile robots 1a-d and monitoring of these. In particular, the illustration shows four robots 1a-d, each associated with a plurality of possible robot states 22a-d indicative of current operational statuses.

A first autonomous mobile robot 1a is associated with a first plurality of possible robot states 22a. In this particular embodiment, these robot states 22a comprise one or more non-deadlock relevant robot states 18a, one or more critical states 19a, and one or more consideration states 20a. In a similar manner, a second robot 1b is associated with a second plurality of possible robot states 22b, a third robot is associated with a third plurality of possible robot states 22c, and a fourth robot 1d is associated with a fourth plurality of possible robot states 22d. The four pluralities of robot states 22a-d each comprises the same possible robot states, but embodiments of the invention are not restricted to identical possible robot states across various robots of a fleet. Other examples of robot states which may be included as possible robot states are occupation states and waiting states.

During operation, each of the robots 1a-d has at least one individual robot state indicative of current operational status of that robot. In the illustrated example, the first robot 1a has a non-deadlock relevant robot state 18a, the second robot 1b has a critical state 19b, the third robot 1c has a non-deadlock relevant state 18c, and the fourth robot 1d has a consideration state 20d. These states can then be monitored to detect occurring deadlock conflicts.

In an embodiment, a deadlock detection processor monitoring these four states 18a, 19b, 18c,20d would identify the critical state 19b of the second robot 1b as a deadlock-relevant robot state 5b. Additionally, it would evaluate the consideration state 20d of the fourth robot 1d in combination with a velocity representation 21 of this robot to assess whether this consideration state should be considered as a deadlock-relevant robot state. The velocity representation may for example be directly or indirectly provided by the robot 1d itself, e.g. via one or more odometers of the robot. If the velocity of the robot is below a velocity threshold, e.g. below 0.2 meters per second, the consideration state qualifies as a deadlock-relevant robot state 5d.

With the identification of deadlock-relevant robot states 5b,5d, a deadlock detection processor may then proceed to detect an occurring deadlock conflict (e.g. between the second robot 1b and the fourth robot 1d) based on whether one robot is being operated into a resource zone blocked by another robot.

Fig 6 illustrates method steps S1-S4 according to an embodiment of the invention. The embodiment is a method for detecting an occurring deadlock conflict in a robot fleet of autonomous mobile robots.

In a first step S1 of the method, a plurality of robot resource zones is designated to respective physical zones in a physical environment. The plurality of robot resource zones may for example be designated such that each resource zone is designated to a unique or separate physical zone. The autonomous mobile robots of the robot fleet are individually capable of blocking and being operated towards resource zones of the plurality of robot resource zones. Here, blocking a resource zone of the plurality of robot resource zones corresponds to blocking a physical zone associated with that resource zone. And being operated towards a resource zone of the plurality of robot resource zones corresponds to being operated towards a physical zone associated with that resource zone.

In a next step S2 of the method, the robot fleet is operated such that autonomous mobile robots of the robot fleet individually and dynamically block different resource zones of the plurality of resource zones. The autonomous mobile robots of the robot fleet individually block different resource zones in the sense that a robot can individually block a robot resource zone, which is different from a resource zone blocked by another robot. And the autonomous mobile robots of the robot fleet dynamically block different robot resource zones in the sense that at one point in time a robot may block a one resource zone, whereas at another point in time, that robot may block another resource zone, different from the previously blocked resource zone.

In a next step S3 of the method, the robot fleet is monitored to identify deadlock-relevant robot states associated with at least two mobile robots of the robot fleet. The deadlock relevant robot states are indicative of restricted movability of the at least two mobile robots. The two mobile robots comprise at least a first robot and a second robot. These at least two robots may alternatively be referred to as conflict robots.

In a next step S4 of the method, it is identified that the first robot is being operated towards a resource zone of the plurality of robot resource zones blocked by the second robot to detect the occurring deadlock conflict.

In practice, methods of the invention are not restricted to a particular sequence of performing steps of the method. In practice, the step S1 of designating a plurality of robot resource zones is typically carried out prior to the other steps S2-S4. The steps S3-S4 of monitoring the robot fleet and identifying that said first robot is being operated towards a resource zone of said plurality of robot resource zones blocked by said second robot are often performed simultaneously with the step S2 of operating the robot fleet. The steps S3-S4 of monitoring and identifying may for example be carried out concurrently, regularly, or continuously during the performance of the step S2 of operating. Further the steps of monitoring S3 and identifying S4 may be performed conditionally with one another. That is, the step S4 of identifying may be performed on the condition that deadlock relevant states have been identified in during the step S3 of monitoring. Or the step S3 of monitoring to identify deadlock-relevant states may be performed on the condition that one robot is identified as being operated towards a resource zone blocked by another robot during the step S4 of identifying, where an occurring deadlock conflict is then detected if the (at least) two robots are associated with deadlock relevant states. Such conditional performance of steps may advantageously provide simplification of automated detection.

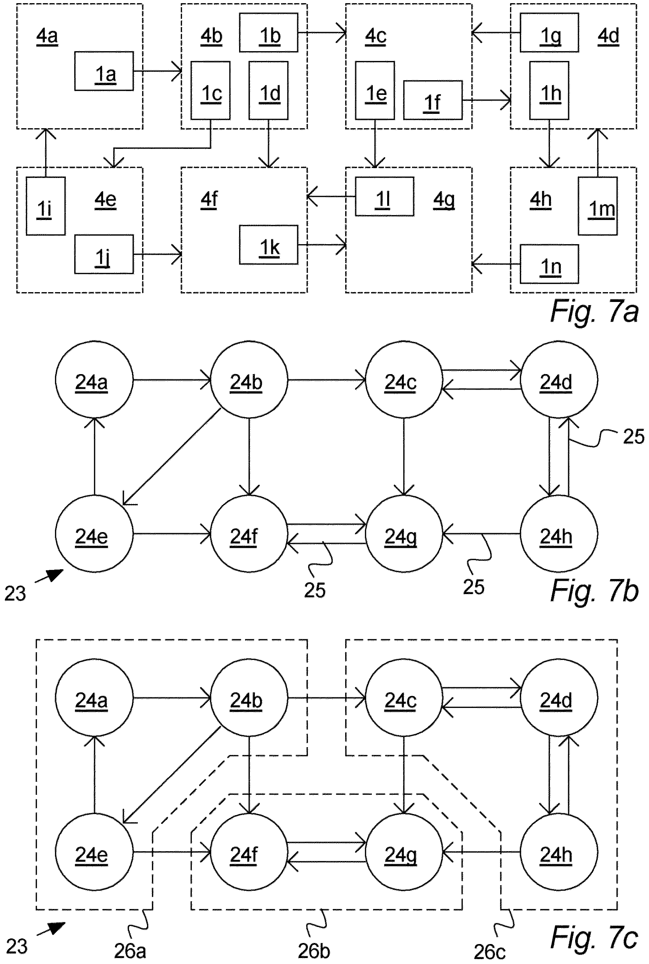

Fig. 7a-c illustrate employment of graph theory concepts in analysis of robot fleets in robot resource zones 4a-h. Fig. 7a illustrates autonomous mobile robots 1a-n occupying and being operated towards different robot resource zones 4a-h. Fig. 7b illustrates how the system illustrated in Fig. 7a can be represented using a digital directed graph. And Fig. 7c illustrates strongly connected components which are usable for detection of occurring deadlock conflicts.

In Fig. 7a, a fleet of autonomous mobile robots 1a-1h are shown, where the robots occupy and are being operated towards various robot resource zones 4a-4h. Some of the resource zones hosts multiple robots. Such systems can be difficult and complex to analyze to correctly identify occurring deadlock conflicts without false positive detections.

In Fig. 7b, the system of Fig. 7a is represented by a digital directed graph 23. Such a representation may for example be established by a deadlock detection processor, or a related control system. Each of the resource zones 4a-4h is now represented as a graph node 24a-h, and a robots being operated towards resource zones are represented by graph edges 25 between the graph nodes representing relevant resource zones of the plurality of resource zones.

The representation of a robot fleet and resource zones by a digital directed graph 23 advantageously provides a simplified overview and simplified analysis of the system.

Optionally, the digital directed graph 23 may be analyzed using a graph-theory algorithm, such as Tarj an's strongly connected components algorithm, to identify one or more strongly connected components 26a-26c of the digital directed graph 23. In a strongly connected component, every graph node is reachable through graph edges from every other graph node of that strongly connected component. For example, in a first strongly connected component 26a of the digital directed graph 23, a first note is reachable from a fifth node 24e, which in turn is reachable from a second node 24b, which in turn is reachable form the first node 24a.

A strongly connected component is indicative that a deadlock conflict could potentially be occurring among robots of graph nodes and/or graph edges of that strongly connected component. For example, a circular deadlock could be occurring between robots 1a, 1c, 1i of the resource zones 4a,4b,4e of the first strongly connected component.

Thus, identification of a strongly connected component may be utilized to detect occurring deadlock conflicts, which is particularly advantageous for systems of high complexity. Identification of a strongly connected component is typically combined with identification of deadlock-relevant robot states of robots of that strongly connected component. Detection of the occurring deadlock conflict may further be combined with additional analysis, e.g. to specifically identify that a first robot is being operated towards a resource zone blocked by a second robot.

From the above, it is now clear that the invention relates to the concept of detecting occurring deadlock conflicts in robot fleets of autonomous mobile robots. By utilizing the concept of monitoring deadlock-relevant robot states and by analyzing robot resource zones associated with robots of these deadlock-relevant states, the invention may permit detection of occurring deadlock conflicts. Autonomous mobile robots often operate in dynamic physical environments with unpredictable disturbances, in which standard solutions for preventing deadlocks are not applicable. Hence, there is a need for methods and systems for reliably and precisely detecting deadlock scenarios as provided by the invention.

### List of reference signs:

- 1: autonomous mobile robot
- 2: physical environment
- 3: physical zone
- 4: robot resource zone
- 5: deadlock-relevant robot state
- 6: occurring deadlock conflict
- 7: deadlock detection processor
- 8: sensory system
- 9: robot control system
- 10: safety controller
- 11: wheel
- 12: support surface
- 13: flat-floored environment
- 14: longitudinal gap
- 15: maximum robot capacity
- 16: number of autonomous mobile robots
- 17: zone capacity saturation indication
- 18: non-deadlock relevant robot state
- 19: critical state
- 20: consideration state
- 21: velocity representation
- 22: plurality of possible robot states
- 23: digital directed graph
- 24: graph node
- 25: graph edge
- 26: strongly connected component
- 27: deadlock detection system

## Claims

1. A method for detecting an occurring deadlock conflict (6) in a robot fleet of autonomous mobile robots (1), said method comprising the steps of:
designating a plurality of robot resource zones (4) to respective physical zones (3) in a physical environment (2), wherein autonomous mobile robots of said robot fleet are individually capable of blocking and being operated towards resource zones of said plurality of robot resource zones;
operating said robot fleet such that autonomous mobile robots of said robot fleet individually and dynamically block different resource zones of said plurality of robot resource zones;
monitoring said robot fleet to identify deadlock-relevant robot states (5) associated with at least two mobile robots of said robot fleet, wherein said deadlock-relevant robot states are indicative of restricted movability of said at least two mobile robots, wherein said at least two mobile robots comprises at least a first robot and a second robot; and
identifying that said first robot is being operated towards a resource zone of said plurality of robot resource zones blocked by said second robot to detect said occurring deadlock conflict (6),
wherein said method is **characterized in that** said first robot and said second robot are each part of a resource zone queue indicative of an operation order of said at least two robots in relation to said resource zone of said plurality of robot resource zones blocked by said second robot.

2. A method according to claim 1, wherein said plurality of robot resource zones is associated with respective maximum robot capacities, each indicative of a maximum number of autonomous mobile robots of said robot fleet occupying a physical zone of said respective physical zones.

3. A method according to claim 2, wherein said method comprises a step of determining that a number of autonomous mobile robots of said robot fleet in said resource zone of said plurality of robot resource zones occupied by said second robot is at said respective maximum robot capacity to provide a zone capacity saturation indication, wherein detection of said occurring deadlock conflict is further based on said zone capacity saturation indication.

4. A method according to any of the preceding claims, wherein detection of said deadlock conflict is further based on a state persistence threshold which is indicative of a time duration in which said restricted movability has persisted during said step of operating said robot fleet.

5. A method according to any of the preceding claims, wherein said method comprises a step of mapping each of said at least two mobile robots to a digital directed graph comprising graph nodes and graph edges indicative of dependencies between said graph nodes, wherein
resource zones of said plurality of robot resource zones are represented by said graph nodes and
autonomous mobile robots of said robot fleet being operated towards resource zones of said plurality of robot resource zones are represented by said graph edges.

6. A method according claim 5, wherein said method comprises a step of analyzing said digital directed graph based on a graph-theory algorithm, such as Tarjan's strongly connected components algorithm, to identify one or more strongly connected components of said digital directed graph, wherein detection of said occurring deadlock conflict is further based on at least one of said one or more strongly connected components.

7. A method according to any of the preceding claims, wherein said method comprises a step of notifying a human operator of said occurring deadlock conflict.

8. A deadlock detection system for detecting an occurring deadlock conflict, wherein said deadlock detection system comprises:
a plurality of robot resource zones designated to respective physical zones of a physical environment;
a robot fleet of autonomous mobile robots individually capable of blocking and being operated towards resource zones of said plurality of robot resource zones; and
a deadlock detection processor configured to monitor said robot fleet to identify deadlock-relevant robot states indicative of restricted movability of individual autonomous mobile robots of said robot fleet during operation of said robot fleet,
wherein said deadlock detection processor is further configured to identify that a first robot is being operated towards a resource zone of said plurality of robot resource zones blocked by a second robot to detect said occurring deadlock conflict when said processor identifies deadlock-relevant robot states associated with at least two robots of said robot fleet, wherein said at least two mobile robots comprises at least said first robot and said second robot,
wherein the system is **characterized in that** said first robot and said second robot are each part of a resource zone queue indicative of an operation order of said at least two robots in relation to said resource zone of said plurality of robot resource zones blocked by said second robot.

9. A deadlock detection system according to claim 8, wherein said robot fleet is configured to provide individual robot states indicative of current operational statuses of respective autonomous mobile robots of said robot fleet, such as said deadlock-relevant robot states, wherein said deadlock detection processor is configured to identify said deadlock-relevant robot states based on identifying said deadlock-relevant robot states among said individual robot states.

10. A deadlock detection system according to claim 9, wherein said individual robot states comprises non-deadlock-relevant robot states indicative of normal operation of individual autonomous mobile robots of said robot fleet during operation of said robot fleet.

11. A deadlock detection system according to any of claims 9 to 10, wherein said individual robot states comprises at least one critical state indicative of a selfsustained operational restriction of an autonomous mobile robot of said robot fleet, wherein said deadlock-relevant robot states comprises said critical state.

12. A deadlock detection system according to any of claims 9 to 11, wherein said individual robot sates comprises consideration states which are evaluated in combination with velocity of respective autonomous mobile robots of said robot fleet to qualify as said deadlock-relevant robot states.

13. A deadlock detection system according to any of claims 8 to 12, wherein said deadlock detection processor is configured to identify said occurring deadlock conflict based on said second robot occupying said resource zone of said plurality of robot resource zones blocked by said second robot.

14. A deadlock detection system according to any of claims 8 to 13, wherein said deadlock detection processor is configured to identify said occurring deadlock conflict based on said second robot occupying a pathway towards said resource zone of said plurality of robot resource zones blocked by said second robot.

## Patentansprüche

1. Verfahren zum Erkennen eines auftretenden Blockierungskonflikts (6) in einer Roboterflotte aus autonomen mobilen Robotern (1), wobei das Verfahren die Schritte umfasst:
Zuordnen einer Vielzahl von Roboterressourcenzonen (4) zu jeweiligen physischen Zonen (3) in einer physischen Umgebung (2), wobei autonome mobile Roboter der Roboterflotte einzeln in der Lage sind, Ressourcenzonen der Vielzahl von Roboterressourcenzonen zu blockieren und zu ihnen hin betrieben zu werden;
Betreiben der Roboterflotte derart, dass autonome mobile Roboter der Roboterflotte einzeln und dynamisch verschiedene Ressourcenzonen der Vielzahl von Roboterressourcenzonen blockieren;
Überwachen der Roboterflotte, um blockierungsrelevante Roboterzustände (5) zu identifizieren, die mit mindestens zwei mobilen Robotern der Roboterflotte verbunden sind, wobei die blockierungsrelevanten Roboterzustände eine eingeschränkte Beweglichkeit der mindestens zwei mobilen Roboter angeben, wobei die mindestens zwei mobilen Roboter mindestens einen ersten Roboter und einen zweiten Roboter umfassen; und
Identifizieren, dass der erste Roboter zu einer Ressourcenzone aus der Vielzahl von Roboterressourcenzonen hin betrieben wird, die durch den zweiten Roboter blockiert sind, um den auftretenden Blockierungskonflikt zu erkennen (6),
wobei das Verfahren **dadurch gekennzeichnet ist, dass** der erste Roboter und der zweite Roboter jeweils Teil einer Ressourcenzonenwarteschlange sind, die eine Betriebsreihenfolge der mindestens zwei Roboter in Bezug auf die Ressourcenzone der Vielzahl von Roboterressourcenzonen angibt, die durch den zweiten Roboter blockiert sind.

2. Verfahren nach Anspruch 1, wobei die Vielzahl der Roboterressourcenzonen mit jeweiligen maximalen Roboterkapazitäten verbunden ist, die jeweils eine maximale Anzahl autonomer mobiler Roboter der Roboterflotte angeben, die eine physische Zone der jeweiligen physischen Zonen belegen.

3. Verfahren nach Anspruch 2, wobei das Verfahren einen Schritt zum Bestimmen umfasst, dass eine Anzahl autonomer mobiler Roboter der Roboterflotte in der Ressourcenzone der Vielzahl von Roboterressourcenzonen, die von dem zweiten Roboter belegt sind, die jeweilige maximale Roboterkapazität erreicht hat, um eine Zonenkapazitätssättigungsangabe bereitzustellen, wobei die Erkennung des auftretenden Blockierungskonflikts ferner auf der Zonenkapazitätssättigungsangabe basiert.

4. Verfahren nach einem der vorstehenden Ansprüche, wobei die Erkennung des Blockierungskonflikts ferner auf einem Zustandsbeständigkeitsschwellenwert basiert, der eine Zeitdauer angibt, in der die eingeschränkte Beweglichkeit während des Schritts des Betreibens der Roboterflotte fortbestanden hat.

5. Verfahren nach einem der vorstehenden Ansprüche, wobei das Verfahren einen Schritt des Abbildens jedes der mindestens zwei mobilen Roboter auf einen digitalen gerichteten Graphen umfasst, der Graphknoten und Graphkanten umfasst, die Abhängigkeiten zwischen den Graphknoten angeben, wobei
Ressourcenzonen der Vielzahl von Roboterressourcenzonen durch die Graphknoten dargestellt werden und
autonome mobile Roboter der Roboterflotte, die zu Ressourcenzonen der Vielzahl von Roboterressourcenzonen hin betrieben werden, durch die Graphkanten dargestellt werden.

6. Verfahren nach Anspruch 5, wobei das Verfahren einen Schritt des Analysierens des digitalen gerichteten Graphen basierend auf einem Graphentheorie-Algorithmus, wie dem Algorithmus von Tarjan zur Bestimmung starker Zusammenhangskomponenten, umfasst, um eine oder mehrere starke Zusammenhangskomponenten des digitalen gerichteten Graphen zu identifizieren, wobei das Erkennen des auftretenden Blockierungskonflikts ferner auf mindestens einer der einen oder mehreren starken Zusammenhangskomponenten basiert.

7. Verfahren nach einem der vorstehenden Ansprüche, wobei das Verfahren einen Schritt zum Benachrichtigen eines menschlichen Betreibers über den auftretenden Blockierungskonflikt umfasst.

8. Blockierungserkennungssystem zum Erkennen eines auftretenden Blockierungskonflikts, wobei das Blockierungserkennungssystem umfasst:
eine Vielzahl von Roboterressourcenzonen, die jeweiligen physischen Zonen einer physischen Umgebung zugeordnet sind;
eine Roboterflotte aus autonomen mobilen Robotern, die einzeln in der Lage sind, Ressourcenzonen der Vielzahl von Roboterressourcenzonen zu blockieren und zu ihnen hin betrieben zu werden; und
einen Blockierungserkennungsprozessor, der dazu konfiguriert ist, die Roboterflotte zu überwachen, um Blockierungsrelevante Roboterzustände zu identifizieren, die eine eingeschränkte Beweglichkeit einzelner autonomer mobiler Roboter der Roboterflotte während des Betriebs der Roboterflotte angeben,
wobei der Blockierungserkennungsprozessor ferner dazu konfiguriert ist, zu erkennen, dass ein erster Roboter in Richtung einer Ressourcenzone der Vielzahl von Roboterressourcenzonen betrieben wird, die durch einen zweiten Roboter blockiert ist, um den auftretenden Blockierungskonflikt zu erkennen, wenn der Prozessor blockierungsrelevante Roboterzustände identifiziert, die mit mindestens zwei Robotern der Roboterflotte verbunden sind, wobei die mindestens zwei mobilen Roboter mindestens den ersten Roboter und den zweiten Roboter umfassen,
wobei das System **dadurch gekennzeichnet ist, dass** der erste Roboter und der zweite Roboter jeweils Teil einer Ressourcenzonenwarteschlange sind, die eine Betriebsreihenfolge der mindestens zwei Roboter in Bezug auf die Ressourcenzone der Vielzahl von Roboterressourcenzonen angibt, die durch den zweiten Roboter blockiert sind.

9. Blockierungserkennungssystem nach Anspruch 8, wobei die Roboterflotte so konfiguriert ist, dass sie individuelle Roboterzustände bereitstellt, die aktuelle Betriebszustände jeweiliger autonomer mobiler Roboter der Roboterflotte angeben, wie etwa die blockierungsrelevanten Roboterzustände, wobei der Blockierungserkennungsprozessor so konfiguriert ist, dass er die blockierungsrelevanten Roboterzustände basierend auf der Identifizierung der blockierungsrelevanten Roboterzustände unter den einzelnen Roboterzuständen identifiziert.

10. Blockierungserkennungssystem nach Anspruch 9, wobei die einzelnen Roboterzustände nicht-blockierungsrelevante Roboterzustände umfassen, die einen normalen Betrieb einzelner autonomer mobiler Roboter der Roboterflotte während des Betriebs der Roboterflotte angeben.

11. Blockierungserkennungssystem nach einem der Ansprüche 9 bis 10, wobei die einzelnen Roboterzustände mindestens einen kritischen Zustand umfassen, der eine selbsterhaltende Betriebsbeschränkung eines autonomen mobilen Roboters der Roboterflotte angibt, wobei die blockierungsrelevanten Roboterzustände den kritischen Zustand umfassen.

12. Blockierungserkennungssystem nach einem der Ansprüche 9 bis 11, wobei die einzelnen Roboterzustände Betrachtungszustände umfassen, die in Kombination mit der Geschwindigkeit der jeweiligen autonomen mobilen Roboter der Roboterflotte ausgewertet werden, um als die blockierungsrelevanten Roboterzustände zu gelten.

13. Blockierungserkennungssystem nach einem der Ansprüche 8 bis 12, wobei der Blockierungserkennungsprozessor so konfiguriert ist, dass er den auftretenden Blockierungskonflikt auf der Grundlage des zweiten Roboters erkennt, der die Ressourcenzone der Vielzahl von Roboterressourcenzonen belegt, die durch den zweiten Roboter blockiert sind.

14. Blockierungserkennungssystem nach einem der Ansprüche 8 bis 13, wobei der Blockierungserkennungsprozessor so konfiguriert ist, dass er den auftretenden Blockierungskonflikt auf der Grundlage des zweiten Roboters erkennt, der einen Weg hin zu der Ressourcenzone der Vielzahl von Roboterressourcenzonen belegt, die durch den zweiten Roboter blockiert sind.

## Revendications

1. Procédé de détection d'un conflit d'interblocage qui se produit (6) dans un parc de robots mobiles autonomes (1), ledit procédé comprenant les étapes consistant à :
désigner une pluralité de zones de ressources de robots (4) pour des zones physiques respectives (3) dans un environnement physique (2), dans lequel des robots mobiles autonomes dudit parc de robots sont individuellement capables de bloquer et d'être opérés vers des zones de ressources de ladite pluralité de zones de ressources de robots ;
opérer ledit parc de robots de telle sorte que les robots mobiles autonomes dudit parc de robots bloquent individuellement et dynamiquement différentes zones de ressources de ladite pluralité de zones de ressources de robots ;
surveiller ledit parc de robots afin d'identifier des états de robot pertinents pour l'interblocage (5) associés à au moins deux robots mobiles dudit parc de robots, dans lequel lesdits états de robot pertinents pour l'interblocage indiquent une mobilité restreinte desdits au moins deux robots mobiles, dans lequel lesdits au moins deux robots mobiles comprennent au moins un premier robot et un second robot ; et
identifier que ledit premier robot est opéré vers une zone de ressources de ladite pluralité de zones de ressources de robots bloquée par ledit second robot afin de détecter ledit conflit d'interblocage qui se produit (6),
dans lequel ledit procédé est **caractérisé en ce que** ledit premier robot et ledit second robot font chacun partie d'une file d'attente de zones de ressources indiquant un ordre d'opération desdits au moins deux robots par rapport à ladite zone de ressources de ladite pluralité de zones de ressources de robots bloquée par ledit second robot.

2. Procédé selon la revendication 1, dans lequel ladite pluralité de zones de ressources de robots est associée à des capacités de robots maximales respectives, chacune indiquant un nombre maximal de robots mobiles autonomes dudit parc de robots occupant une zone physique desdites zones physiques respectives.

3. Procédé selon la revendication 2, dans lequel ledit procédé comprend une étape consistant à déterminer qu'un nombre de robots mobiles autonomes dudit parc de robots dans ladite zone de ressources de ladite pluralité de zones de ressources de robots occupées par ledit second robot se trouve à ladite capacité de robot maximale respective pour fournir une indication de saturation de capacité de zone, dans lequel la détection dudit conflit d'interblocage qui se produit est outre basée sur ladite indication de saturation de capacité de zone.

4. Procédé selon l'une quelconque des revendications précédentes, dans lequel la détection dudit conflit d'interblocage est en outre basée sur un seuil de persistance d'état qui indique une durée de temps pendant laquelle ladite mobilité restreinte a persisté au cours de ladite étape consistant à opérer ledit parc de robots.

5. Procédé selon l'une quelconque des revendications précédentes, dans lequel ledit procédé comprend une étape consistant à mapper chacun desdits au moins deux robots mobiles sur un graphe orienté numérique comprenant des noeuds de graphe et des bords de graphe indiquant des dépendances entre lesdits noeuds de graphe, dans lequel
les zones de ressources de ladite pluralité de zones de ressources de robots sont représentées par lesdits noeuds de graphe et
les robots mobiles autonomes dudit parc de robots opérant vers les zones de ressources de ladite pluralité de zones de ressources de robots sont représentés par lesdits bords de graphe.

6. Procédé selon la revendication 5, dans lequel ledit procédé comprend une étape consistant à analyser ledit graphe orienté numérique sur la base d'un algorithme de théorie de graphe, tel qu'un algorithme des composantes fortement connexes de Tarjan, afin d'identifier une ou plusieurs composantes fortement connexes dudit graphe orienté numérique, dans lequel la détection dudit conflit d'interblocage qui se produit est en outre basée sur au moins l'une parmi ladite ou lesdites composantes fortement connexes.

7. Procédé selon l'une quelconque des revendications précédentes, dans lequel ledit procédé comprend une étape consistant à notifier un opérateur humain dudit conflit d'interblocage qui se produit.

8. Système de détection d'interblocage permettant de détecter un conflit d'interblocage qui se produit, dans lequel ledit système de détection d'interblocage comprend :
une pluralité de zones de ressources de robots désignées pour des zones physiques respectives d'un environnement physique ;
un parc de robots de robots mobiles autonomes capables de bloquer et d'être opérés individuellement vers des zones de ressources de ladite pluralité de zones de ressources de robots ; et
un processeur de détection d'interblocage configuré pour surveiller ledit parc de robots afin d'identifier des états de robot pertinents pour l'interblocage indiquant une mobilité restreinte des robots mobiles autonomes individuels dudit parc de robots pendant l'opération dudit parc de robots,
dans lequel ledit processeur de détection d'interblocage est en outre configuré pour identifier qu'un premier robot est opéré vers une zone de ressources de ladite pluralité de zones de ressources de robots bloquée par un second robot afin de détecter ledit conflit d'interblocage qui se produit lorsque ledit processeur identifie des états de robot pertinents pour l'interblocage associés à au moins deux robots dudit parc de robots, dans lequel lesdits au moins deux robots mobiles comprennent au moins ledit premier robot et ledit second robot,
dans lequel le système est **caractérisé en ce que** ledit premier robot et ledit second robot font chacun partie d'une file d'attente de zone de ressources indiquant un ordre d'opération desdits au moins deux robots par rapport à ladite zone de ressources de ladite pluralité de zones de ressources de robots bloquée par ledit second robot.

9. Système de détection d'interblocage selon la revendication 8, dans lequel ledit parc de robots est configuré pour fournir des états de robot individuels indiquant des états opérationnels actuels des robots mobiles autonomes respectifs dudit parc de robots, tels que lesdits états de robot pertinents pour l'interblocage, dans lequel ledit processeur de détection d'interblocage est configuré pour identifier lesdits états de robot pertinents pour l'interblocage sur la base de l'identification desdits états de robot pertinents pour l'interblocage parmi lesdits états de robot individuels.

10. Système de détection d'interblocage selon la revendication 9, dans lequel lesdits états de robot individuels comprennent des états de robot non pertinents pour l'interblocage, indiquant une opération normale de robots mobiles autonomes individuels dudit parc de robots pendant l'opération dudit parc de robots.

11. Système de détection d'interblocage selon l'une quelconque des revendications 9 à 10, dans lequel lesdits états de robot individuels comprennent au moins un état critique indiquant une restriction opérationnelle auto-entretenue d'un robot mobile autonome dudit parc de robots, dans lequel lesdits états de robot pertinents pour l'interblocage comprennent ledit état critique.

12. Système de détection d'interblocage selon l'une quelconque des revendications 9 à 11, dans lequel lesdits états de robot individuels comprennent des états de considération qui sont évalués en combinaison avec la vitesse des robots mobiles autonomes respectifs dudit parc de robots afin d'être qualifiés d'états de robot pertinents pour l'interblocage.

13. Système de détection d'interblocage selon l'une quelconque des revendications 8 à 12, dans lequel ledit processeur de détection d'interblocage est configuré pour identifier ledit conflit d'interblocage qui se produit sur la base de ladite occupation par ledit second robot de ladite zone de ressources de ladite pluralité de zones de ressources de robots bloquée par ledit second robot.

14. Système de détection d'interblocage selon l'une quelconque des revendications 8 à 13, dans lequel ledit processeur de détection d'interblocage est configuré pour identifier ledit conflit d'interblocage qui se produit sur la base de l'occupation par ledit second robot d'un chemin vers ladite zone de ressources de ladite pluralité de zones de ressources de robots bloquée par ledit second robot.
